(19) Europäisches Patentamt
European Patent Office
Office européen des brevets

(11) EP 0 964 529 A2

(12) EUROPEAN PATENT APPLICATION

(43) Date of publication:
15.12.1999 Bulletin 1999/50

(51) Int. Cl.⁶: $H04B\ 7/005$

(21) Application number: 99111171.7

(22) Date of filing: 08.06.1999

(84) Designated Contracting States:
AT BE CH CY DE DK ES FI FR GB GR IE IT LI LU
MC NL PT SE
Designated Extension States:
AL LT LV MK RO SI

(30) Priority: 12.06.1998 JP 16550898

(71) Applicant:
MATSUSHITA ELECTRIC INDUSTRIAL CO., LTD.
Kadoma-shi, Osaka 571-8501 (JP)

(72) Inventors:
• Miya, Kazuyuki
Kawasaki-shi, Kanagawa 215-0021 (JP)
• Uesugi, Mitsuru
Yokosuka-shi, Kanagawa 238-0048 (JP)

(74) Representative:
Grünecker, Kinkeldey,
Stockmair & Schwanhäusser
Anwaltssozietät
Maximilianstrasse 58
80538 München (DE)

(54) Channel estimation apparatus and communication terminal apparatus

(57) The channel estimation apparatus of the present invention comprises a section for receiving pilot signals of the self channel and a section for receiving pilot signals of other channels that are multiplexed and transmitted from a same antenna and estimates the channel status from both pilot signals above.

FIG. 3

EP 0 964 529 A2

## Description

### BACKGROUND OF THE INVENTION

#### Field of the Invention

The present invention relates to communication terminal apparatuses carrying out radio communications with base station apparatuses in radio communication systems.

#### Description of the Related Art

A multiple access system in a radio communication system refers to a channel access system when a plurality of stations carry out communications simultaneously using a same band. CDMA in this multiple access system refers to Code Division Multiple Access, a technology implementing multiple access through spread spectrum communications with the spectrum of an information signal spread over a sufficiently wide band with respect to the original information bandwidth. It is also called "Spread Spectrum Multiple Access (SSMA)."

In a CDMA system, Transmit Power Control (hereinafter referred to as "TPC") is generally carried out through a communication channel assigned to each user according to conditions of the transmission path between communicating parties. In CDMA communications, a plurality of communications share a same frequency, which gives rise to a problem (near-far problem) that the power of an interference wave (a communication wave of another station) coincides with that of a desired wave at the receiving end. Solving this problem is a premise in realizing the CDMA system.

The near-far problem becomes more serious during reception at a base station (uplink) which receives radio waves simultaneously from multiple mobile stations at different places, and therefore it is essential for the mobile stations to carry out TPC according to the conditions of the respective transmission paths. On the other hand, TPC is also carried out on the downlink (channel from a base station to a mobile station) in accordance with the SIR (signal to interference ratio) due to fading variations or interference from peripheral cells.

Furthermore, a channel estimation technology to carry out synchronizing detection is essential to CDMA. Regarding the channel estimation system, as described in "DS/CDMA Weighted Multi-Symbol Averaging (WMSA) Pilot Channel Characteristics" by Abeta, Ando, Sawabashi, Adachi, et al. (TECHNICAL REPORT OF IEICE RC97-163, 1997-11), two systems are available; a time-division type pilot channel system that inserts a pilot symbol periodically and a parallel pilot channel system that carries out transmission by continuously suppressing power. A conventional method for improving the characteristics of these two channel estimation systems is the Weighted Multi-Symbol Averaging (WMSA) channel estimation system proposed in the document quoted above.

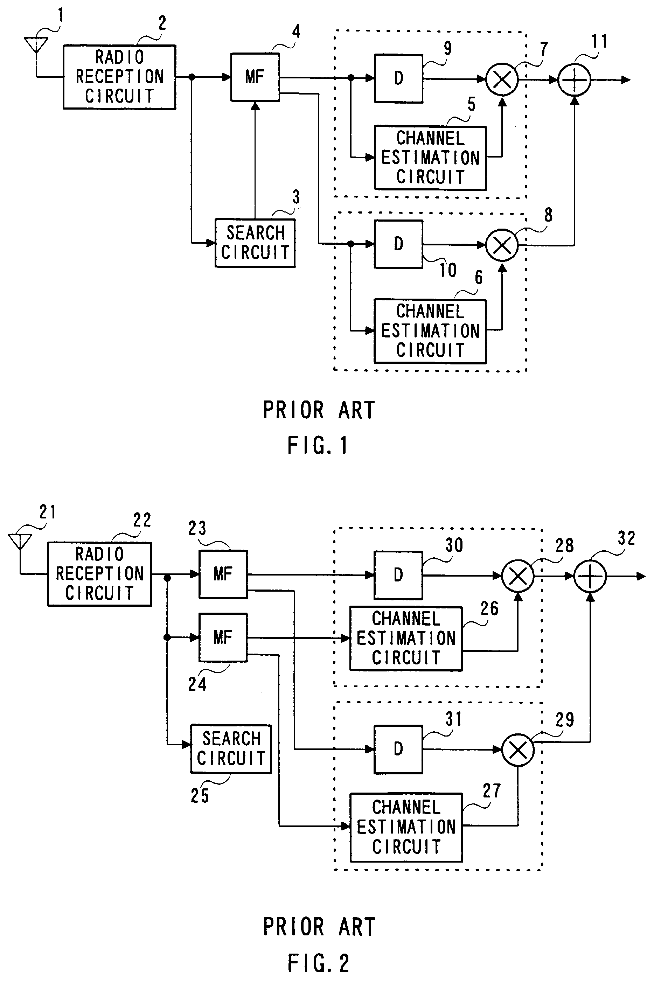

FIG.1 is a block diagram showing the configuration of a reception section comprising channel estimation apparatuses based on a time-division type pilot channel system. The transmitting side carries out transmission by inserting Np pilot data for every Ns transmit data symbols. On the receiving side, a signal received by antenna 1 is down-converted and demodulated by radio reception circuit 2, then despread by matched filter 4 at a timing detected by search circuit 3.

Pilot symbols are extracted from the despread signal, their data corresponding to several slots are accumulated and channel estimations are carried out by estimation circuits 5 and 6 based on that information. The despread signal is subjected to synchronizing detection by synchronizing detection sections 7 and 8 using estimated values obtained by channel estimation circuits 5 and 6, and with a time delay compensated by delay processing sections 9 and 10, the signals of these paths are combined at the maximum ratio (RAKE combining) in combining section 11.

The channel estimation system is based on the principle as follows: Suppose an estimated value of complex impulse response of the mth symbol of the nth slot of the first branch is given by expression (1) below. The complex impulse response after synchronizing addition is expressed in expression (2), and using pilot symbols of a plurality of slots before and after the slot the channel estimated value shown in expression (3) is obtained.

$$\hat{h}_l(n,m) \tag{1}$$

$$\hat{\xi}_l(n) = \frac{1}{N_p} \sum_{m=0}^{N_p-1} \hat{h}_l(n,m) \tag{2}$$

$$\hat{\xi}_l(n) = \sum_{i=-K+1}^{K} \alpha_i \hat{\xi}_l(n+i) \tag{3}$$

Where, $\alpha_i$ ($\leq 1$) is a weighting coefficient. Using estimated values of highly correlated slots before and after the slot makes it possible to improve the accuracy of channel estimations.

FIG.2 is a block diagram showing the configuration of a reception section comprising channel estimation apparatuses based on a parallel type pilot channel system. The transmitting side inserts a pilot channel signal orthogonal to a data channel signal with suppressed transmit power between data. On the receiving side, a signal received by antenna 21 is down-converted and demodulated by radio reception circuit 22, then despread by matched filters 23 and 24 at a timing detected by search circuit 25. At this time, the signal is despread in synchronizing with a spreading code of the pilot channel and channel estimations are carried out by channel estimation circuits 26 and 27 based on the data accumulated for several symbols. The despread signals are subjected to synchronizing detection by synchronizing detection sections 28 and 29 using the estimated values obtained by channel estimation circuits 26 and 27, and with a time delay compensated by delay processing sections 30 and 31, the signals of these paths are combined at the maximum ratio (RAKE combining) in combining section 32.

The channel estimation system is based on the principle as follows: Suppose an estimated value of complex impulse response of the nth symbol of the first branch is given by expression (4) below. By applying weighted synchronizing addition to 2L symbols before and after the symbol, the channel estimated value shown in expression (5) below is obtained.

$$\hat{h}_l(n) \qquad (4)$$

$$\hat{\xi}_l(n) = \frac{1}{2L} \sum_{m=-L}^{L-1} \beta_m \hat{h}_l(n+m) \qquad (5)$$

Where, $\beta m$ ($\leqq 1$) is a weighting coefficient. As in the case of the time multiplexing pilot channel system, the characteristic changes depending on the values of $\beta m$ and L, but optimizing the characteristic can improve the accuracy of channel estimations. If a parallel pilot channel system is used on the downlink, a same pilot channel may be used among different users (treated as a common control channel).

However, the conventional system has a problem that if a transmit signal of another channel is sent from the same antenna, only pilot signals of the self channel are used for channel estimations (channel estimations) although the other channel also has pilot signals.

In the case of the time-multiplexing type pilot channel system in particular, if the transmit timing of a pilot signal differs between the self channel and the other channel, although the pilot signal of the other channel contains the channel status information on a section that cannot be obtained from the pilot signal of the self channel, this information is not used for channel estimations.

Furthermore, a CDMA cellular radio communication apparatus is generally equipped with a plurality of demodulation systems (correlators and channel estimation circuits) for soft handover and RAKE combining. Enabling these demodulation systems to be changed over according to the situation will make it possible to estimate the channel status of the other channel without further adding any demodulation systems above.

SUMMARY OF THE INVENTION

It is an objective of the present invention to provide an excellent CDMA radio communication apparatus making it possible to improve the accuracy of channel estimations by carrying out channel estimations using not only pilot signals of the self channel but also pilot signals of other channels through channel estimation apparatuses used in a DS-CDMA radio communication apparatus carrying out synchronizing detection through channel estimations using pilot signals.

The inventor, et al. came up with the present invention by taking notice of the fact that when transmit signals from other channels including pilot signals are transmitted from a same antenna, only pilot signals of the self channel are used for channel estimations (channel estimations), and discovering that it would be possible to improve the accuracy of channel estimations by carrying out channel estimations using not only pilot signal of the self channel but also pilot signals of other channels.

In this case, it is possible to estimate the channel status of other channels by changing over a plurality of demodulation systems (correlators and channel estimation circuits) for soft handover and RAKE combining generally provided for a CDMA cellular radio communication apparatus without further adding any demodulation systems above.

According to the present invention, in the case of a time-multiplexing type pilot channel system in particular, if the transmit timing of pilot signals differs between the self channel and other channels, it is possible to obtain the information of the channel status of a section that cannot be obtained from the pilot signals of the self channel from the pilot signals of the other channels and carry out channel estimations using this information, making it possible to improve the accuracy of channel estimations.

BRIEF DESCRIPTION OF THE DRAWINGS

The above and other objects and features of the invention will appear more fully hereinafter from a consideration of the following description taken in connection with the accompanying drawing wherein one example is illustrated by way of example, in which;

FIG.1 is a block diagram showing the configuration of a conventional radio communication apparatus;
FIG.2 is a block diagram showing the configuration of a conventional radio communication apparatus;
FIG.3 is a block diagram showing the configuration of a radio communication apparatus (reception section) according to Embodiment 1 of the present invention;
FIG.4 is a block diagram showing the configuration of channel estimation circuits of the radio communication apparatus shown in FIG.3;

FIG.5 is a block diagram showing the configuration of a terminal apparatus comprising the radio communication apparatus shown in FIG.3;

FIG.6 is a block diagram showing the configuration of a radio communication apparatus according to Embodiment 2 of the present invention;

FIG.7 is a block diagram showing the configuration of a channel estimation apparatus in a radio communication apparatus according to Embodiment 3 of the present invention;

FIG.8 is a block diagram showing the configuration of radio communication apparatuses according to Embodiments 4 to 6 of the present invention;

FIG.9 is a block diagram showing the configuration of a radio communication apparatus according to Embodiment 7 of the present invention; and

FIG.10 is a block diagram showing the configuration of a radio communication apparatus according to Embodiment 8 of the present invention.

DETAILED DESCRIPTION OF THE PREFERRED EMBODIMENTS

With reference now to the attached drawings, the embodiments of the present invention are explained in detail below.

(Embodiment 1)

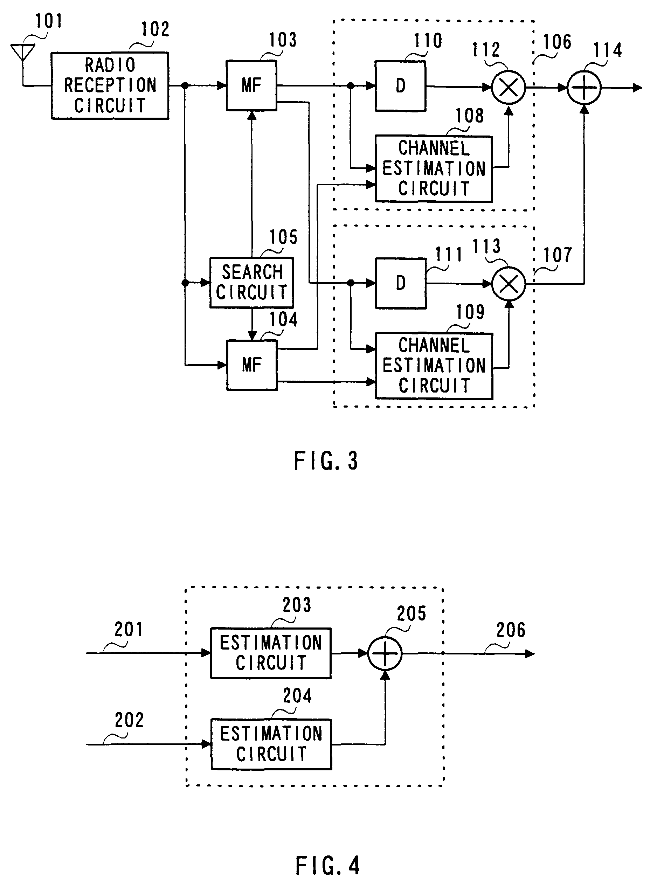

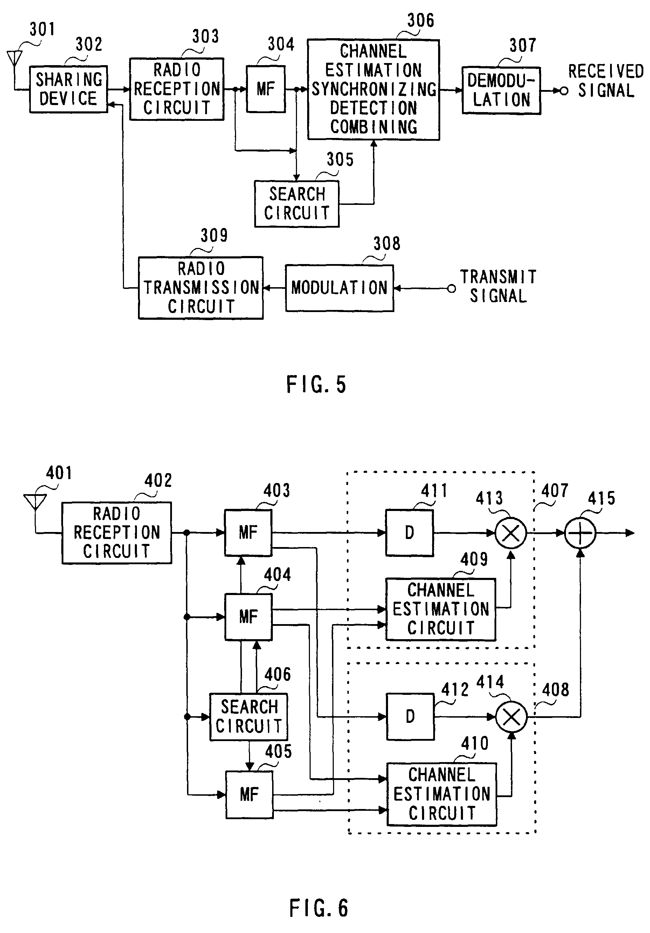

FIG.3 is a block diagram showing the configuration of a radio communication apparatus (reception section) according to Embodiment 1 of the present invention. FIG.4 is a block diagram showing the configuration of channel estimation circuits of the radio communication apparatus shown in FIG.3. FIG.5 is a block diagram showing the configuration of a terminal apparatus (mobile station) comprising the radio communication apparatus shown in FIG.3. Embodiment 1 is explained using FIG.3 to FIG.5.

In the terminal apparatus shown in FIG.5, a signal is received, for example, from antenna 301 of the terminal shown in FIG.5, sent to radio reception circuit 303 via sharing device 302 where it is down-converted and demodulated. Then, the received signal is despread by matched filter 304, subjected to channel estimations, synchronizing detection and combining by synchronizing detection section 306 for the path corresponding to the timing detected by search circuit 305 and demodulated by demodulation section 307.

On the other hand, a transmit signal is modulated by modulation section 308, up-converted by radio transmission circuit 309 and transmitted from antenna 301 via sharing device 302. That is, the transmitting side (not shown in the figure) carries out transmission by time-multiplexing Np pilot data (pilot block) for every Ns symbols of transmit data.

This transmit signal is sent to the radio communication apparatus. On the receiving side of the radio communication apparatus, the signal received from antenna 101 is down-converted and demodulated by radio reception circuit 102 and despread by matched filters 103 and 104. Matched filter 103 despreads the signal of the self channel and matched filter 104 despreads the signal of another channel.

The despread signals of two path timings detected by search circuit 105 are input to synchronizing detection circuits 106 and 107, respectively. Here, the despread signals of the respective matched filter pilot symbols are input to channel estimation circuits 108 and 109.

In FIG.4, reference code 201 is a despread pilot signal of the self channel and reference code 202 is a despread pilot signal of the other channel. Signals 201 and 202 are subjected to channel estimations for the respective channels by estimation circuits 203 and 204. These signals are combined by combining section 205 and output as a combined estimated value.

Channel estimations are carried out based on the principle as follows: Suppose the despread signal of the first path of the mth symbol of the nth slot is given by expression (1) above, then a channel estimated value of the first path of the nth pilot block can be obtained from expression (2) above.

Furthermore, suppose an estimated value of the self channelchannelstimation circuit 203 is $\zeta l(n)$self and an estimated value of the other channelchannelstimation circuit 204 is $\zeta l(n)$other, then output 206 after the combining is given by expression (6) below:

$$\zeta l(n) = \zeta l(n)\text{self} + \zeta l(n)\text{other} \qquad (6)$$

Using the estimated values obtained by channel estimation circuits 108 and 109 according to the methods above, the despread signals are compensated for a time delay by delay processing sections 110 and 111, subjected to synchronizing detection by synchronizing detection sections 112 and 113 and RAKE-combined by combining section 114. Channel estimations here are carried out using not only pilot signals of the self channel but also pilot signals of the other channel. This makes it possible to improve the accuracy of channel estimations in channel estimation apparatuses used for a CDMA radio communication apparatus that carries out synchronizing detection through channel estimations using time-multiplexed pilot signals.

The embodiment above explains the case where channel estimations are carried out through two paths followed by RAKE combining, but it can improve the accuracy of channel estimations through one path or 3 or more paths as well. The embodiment above also explains the case where another channel is used, but the embodiment above can naturally be implemented with a plurality of other channels.

(Embodiment 2)

FIG.6 is a block diagram showing the configuration of a radio communication apparatus (reception section) according to Embodiment 2 of the present invention. Embodiment 2 is explained using FIG.6 to FIG.4. The explanation of a terminal apparatus in the present embodiment is the same as that in Embodiment 1, and is omitted here.

The transmitting side carries out transmission by inserting (code-multiplexing) a pilot channel orthogonal to a data channel with its transmit power suppressed. On the receiving side, a signal received from antenna 401 is down-converted and demodulated by radio reception circuit 402, despread by matched filters 403 to 405. Matched filters 403 and 404 despread a data signal and pilot signal of the self channel, respectively and matched filter 405 despreads a pilot signal of the other channel.

The despread signals of two path timings detected by search circuit 406 are input to synchronizing detection circuits 407 and 408, respectively. Here, the despread signals of the pilot symbols of the respective matched filters are input to channel estimation circuits 409 and 410.

In FIG.4, reference code 201 is a despread pilot signal of the self channel and reference code 202 is a despread pilot signal of the other channel. Signals 201 and 202 are subjected to channel estimations for the respective channels by estimation circuits 203 and 204. These signals are combined by combining section 205 and output as a combined estimated value.

Channel estimations are carried out based on the principle as follows: Suppose the despread signal of the first path of the nth slot is given by expression (4) above, then a channel estimated value shown in expression (7) below is obtained by carrying out synchronizing addition of 2T symbols before and after the slot.

$$\hat{\xi}_l(n) = \sum_{m=-T}^{T-1} \hat{h}_l(n+m) \qquad (7)$$

Furthermore, suppose an estimated value of the self channechannelstimation circuit 203 is ζl(n)self and an estimated value of the other channechannelstimation circuit 204 is ζl(n)other, then output 206 after the combining is given by expression (6) above:

Using the estimated values obtained by channel estimation circuits 409 and 410 according to the methods above, the despread signals are compensated for a time delay by delay processing sections 411 and 412, subjected to synchronizing detection by synchronizing detection sections 413 and 414 and RAKE-combined by combining section 415. Channel estimations are carried out using not only pilot signals of the self channel but also pilot signals of the other channel. This makes it possible to improve the accuracy of channel estimations in channel estimation apparatuses used for a CDMA radio communication apparatus that carries out synchronizing detection through channel estimations using code-multiplexed pilot signals.

The embodiment above explains the case where channel estimations are carried out through two paths followed by RAKE combining, but it can improve the accuracy of channel estimation with one path or 3 or more paths as well. The embodiment above also explains the case where another channel is used, but the embodiment above can naturally be implemented with a plurality of other channels.

(Embodiment 3)

On the downlink (channel from a base station to mobile station), a plurality of channels are multiplexed and transmitted from a same antenna. At this time, TCP is generally not carried out for common control channels. On the other hand, for communication channels assigned to the respective users, transmission is performed with TPC individually carried out on a channel basis.

In this case, at a certain mobile station, communication channels of the self channel obtain stable reception power through TPC, while common control channels are not subjected to TPC. Other communication channels are naturally subjected to TPC for other users at different places, and therefore reception power of these is not stable but changes drastically. This means that the reliability of estimated values by the self channel and the reliability of estimated values by other channels vary drastically with time. Therefore, the present embodiment combines estimated values of the self channel and estimated values of other channels multiplexed and transmitted from a same antenna after weighting them.

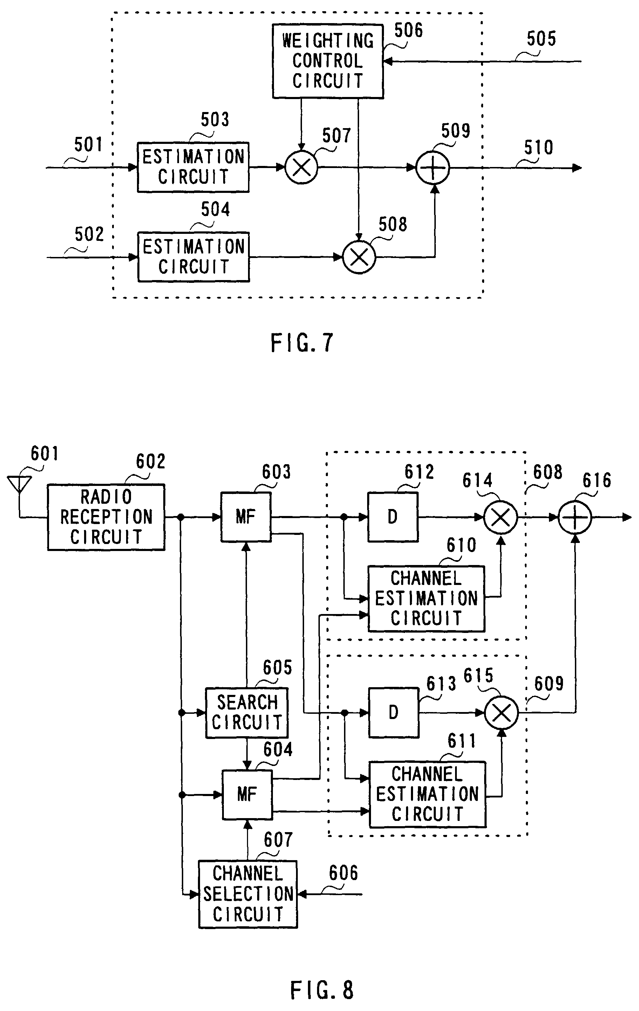

FIG.7 is a block diagram showing the configuration of a radio communication apparatus (reception section) according to Embodiment 3 of the present invention. The configuration of the radio communication apparatus in Embodiment 3 is the same as that shown in FIG.3 and FIG.6 and its operation is the same as that of Embodiments 1 and 2. Embodiment 3 is explained using the block diagram of the channel estimation circuits in FIG.7.

In FIG.7, reference code 501 is a despread pilot signal of the self channel and reference code 502 is a despread pilot signal of the other channel. Signals 501 and 502 are subjected to channel estimations for each channel by estimation circuits 503 and 504. The channel estimation principle is the same as that in Embodiments 2 and 3.

Weighting control circuit 506 controls weight γ when combining two estimated values. Weight γ may be determined using the magnitude of estimated values of estimation circuits 503 and 504, search circuit information, information of the channel selection circuit described later, moving speed information of the mobile station (recipient), power change information, fading variation information, etc. as input 505. Weight $\gamma$ is obtained based on the level of reliability of these two estimated values, then weighted by multipliers 507 and 508, and combined by combining section 509.

Here, suppose an estimated value of the self channel from estimation circuit 503 is $\zeta l(n)$self and an estimated value of the other channel from estimation circuit 504 is $\zeta l(n)$other, output 510 after the combining is given by expression (8) below:

$$\zeta l(n) = 1 \times \zeta l(n)\text{self} + \gamma \times \zeta l(n)\text{other} \qquad (8)$$

Thus, the two estimated values above are weighted according to reliability and then combined, making it possible to improve the accuracy of channel estimations in a channel estimation apparatus used for a CDMA radio communication apparatus carrying out synchronizing detection through channel estimations using pilot signals according to various situations.

(Embodiment 4)

Other channels transmitted from a same antenna include common control channels not subjected to TPC, communication channels individually subjected to TPC for each channel, etc., and it is important from the standpoint of improving the accuracy to determine which of other channels should be selected and combined for channel estimations. The present embodiment describes a case where other reliable channels in terms of reception power, that is, other channels with large average reception power are selected to improve the accuracy of channel estimations.

FIG.8 is a block diagram showing the configuration of a radio communication apparatus (reception section) according to Embodiments 4 of the present invention. Embodiment 4 is explained below using FIG.8. In the present embodiment, the explanation of a terminal apparatus is the same as that in Embodiment 1, and is omitted here.

The transmitting side carries out transmission by time-multiplexing Np pilot data (pilot block) for every Ns symbols of transmit data. On the receiving side, a signal received by antenna 601 is down-converted and demodulated by radio reception circuit 602, and then despread by matched filters 603 and 604.

This received signal is also input to channel selection circuit 607. This channel selection circuit 607 receives information 606 necessary for selecting other channels such as spreading codes of the selection candidate channels, channel identification (distinction between control channel and communication channel), pilot signal timing, selection criteria (average reception power). Then, channel selection circuit 607 measures the average reception power of the received signal based on this information, selects the channel with the maximum power and sends it to matched filter 604 as the selection information or spreading code. Then, matched filter 603 despreads a signal of the self channel and matched filter 604 despreads a signal of the selected other channel.

The despread signals with two path timings detected by search circuit 605 are input to synchronizing detection circuits 608 and 609, respectively. Here, the despread signals of the pilot symbols of the matched filters are input to channel estimation circuits 610 and 611, respectively. The operation and principle of the channel estimation circuits are the same as those in Embodiment 1. Using the estimated values obtained by estimation circuits 610 and 611, these signals are compensated for a time delay by delay processing sections 612 and 613, subjected to synchronizing detection by synchronizing detection circuits 614 and 615, and RAKE-combined by combining section 616.

This makes it possible to select information from other reliable channels and use it for estimations of the channel status, improving the reliability of estimated values and enabling more accurate channel estimations. The embodiment above explains the case of time-multiplexed pilot signals, but it can also be implemented in the case of code-multiplexed pilot signals as well. It is obvious that the channel estimation circuits in the present embodiment can also perform weighting and combining shown in Embodiment 3.

(Embodiment 5)

Embodiment 4 explained the case where improvement of the accuracy of channel estimations was sought by selecting other reliable channels in terms of reception power, that is, other channels with great average reception power. However, there are also channels with great reception power but with scarce traffic as packet transmission.

In such a case, the frequency of obtaining estimated values of the channel status from other channels, that is, the volume of information of the channel status is so small that it will be more difficult to improve channel estimations. The present embodiment explains a case where instead of selecting channels with scarce traffic like packet channels, channels being continuously transmitted or channels with dense traffic (channels with dense transmission status) are selected to improve the accuracy of channel estimations.

Embodiment 4 is explained below using FIG.8. In the present embodiment, the explanation of a terminal apparatus is the same as that in Embodiment 1 and is omitted here.

The transmitting side carries out transmission by time-multiplexing Np pilot data (pilot block) for every Ns symbols of transmit data. On the receiving side, a signal received by antenna 601 is down-converted and demodulated by radio reception circuit 602, and then despread by matched filters 603 and 604.

This received signal is also input to channel selection circuit 607. This channel selection circuit 607 receives information 606 necessary for selecting other channels such as spreading codes of the selection candidate channels, channel identification (distinction between control channel and communication channel), pilot signal timing, selection criteria (traffic volume). Then, channel selection circuit 607 measures the traffic volume of each channel based on this information, selects the channel with the maximum traffic volume and sends it to matched filter 604 as the selection information or spreading code. Then, matched filter 603 despreads signals of the self channel and matched filter 604 despreads signals of the selected other channel.

The despread signals with two path timings detected by search circuit 605 are input to synchronizing detection circuits 608 and 609, respectively. Here, the despread signals of the pilot symbols of the matched filters are input to channel estimation circuits 610 and 611. The operation and principle of the channel estimation circuits are the same as those in Embodiment 1. Using the estimated values obtained by channel estimation circuits 610 and 611, these are compensated for a time delay by delay processing sections 612 and 613, subjected to synchronizing detection by synchronizing detection circuits 614 and 615, and RAKE-combined by combining section 616.

This makes it possible to select information from other reliable channels and use it for estimation of the channel status, improving the reliability of estimated values and enabling more accurate channel estimations. As the selection criteria, however, it is also possible to combine average reception power as in Embodiment 4 to select channels with a high traffic volume and large average reception power. The embodiment above explains the case of time-multiplexed pilot signals, but the embodiment above can be implemented in the case of code-multiplexed pilot signals as well. It is also obvious that the channel estimation circuits of the present embodiment can perform weighting and combining as shown in Embodiment 3.

(Embodiment 6)

Embodiment 6 explains a case where improvement of the accuracy of channel estimations is sought by selecting other channels having pilot signals transmitted at a timing with the largest possible difference from the transmit timing of pilot signals of the self channel, making it possible to obtain information of the channel status corresponding to the time during which such information cannot be obtained by pilot signals of the self channel.

Embodiment 6 is explained below using FIG.8. In the present embodiment, the explanation of a terminal apparatus is the same as that of Embodiment 1 and is omitted here.

The transmitting side carries out transmission by time-multiplexing Np pilot data (pilot block) for every Ns symbols of transmit data. On the receiving side, a signal received by antenna 601 is down-converted and demodulated by radio reception circuit 602, and then despread by matched filters 603 and 604.

This received signal is also input to channel selection circuit 607. This channel selection circuit 607 receives information 606 necessary for selecting other channels such as spreading codes of the selection candidate channels, channel identification (distinction between control channel and communication channel), pilot signal timing, selection criteria (pilot signal timing). Then, channel selection circuit 607 compares the transmit timing of a pilot signal of each channel based on this information, selects the other channel with the pilot signal transmitted at a timing with the greatest difference from the transmit timing of the pilot signal of the self channel and sends it to matched filter 604 as the selection information or spreading code. Then, matched filter 603 despreads signals of the self channel and matched filter 604 despreads signals of the selected other channel.

The despread signals with two path timings detected by search circuit 605 are input to synchronizing detection circuits 608 and 609, respectively. Here, the despread signals of the pilot symbols of the matched filters are input to channel estimation circuits 610 and 611. The operation and principle of the channel estimation circuits are the same as those in Embodiment 1. Using the estimated values obtained by channel estimation circuits 610 and 611, these signals are compensated for a time delay by delay processing sections 612 and 613, subjected to synchronizing detection by synchronizing detection circuits 614 and 615, and RAKE-combined by combining section 616.

This makes it possible to obtain information of the channel status corresponding to the time during which such information cannot be obtained from pilot signals of the self channel, select information from other reliable channels and use it for estimations of the channel status, improving the reliability of estimated values and enabling more accurate channel estimations. The apparatus in the present embodiment is effective in the time-multiplexing type pilot channel system in particular. It is obvious that the present embodiment is also effective in the code-multiplexed type pilot channel system if pilot signals are not continuous signals but burst signals.

As the selection criteria, it is also possible to combine not only pilot signal timings but also average reception power and traffic volume as shown in Embodiments 4 and 5 to select channels with the largest possible timing difference and a high traffic volume and large average reception power.

(Embodiment 7)

Embodiment 7 explains a case where a plurality of demodulation systems such as correlators and channel estimation circuits provided at the reception section for multi-codes, soft handover and RAKE combining are also provided for channel estimations of other channels and changed over according to the use without additional hardware.

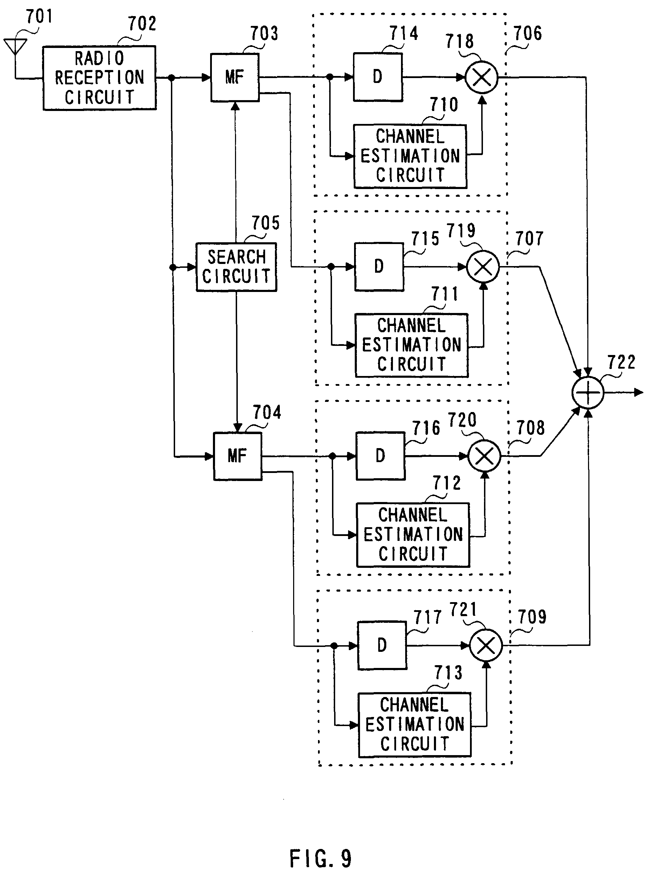

Embodiment 7 is explained below using FIG.9. FIG.9 is a block diagram showing the configuration of reception sections each carrying out 2-path RAKE reception in a soft handover state with 2 base stations. In the present embodiment, the explanation of a terminal apparatus is the same as that in Embodiment 1 and is omitted here.

The transmitting side carries out transmission by time-multiplexing Np pilot data (pilot block) for every Ns symbols of transmit data. In this example, suppose same information is transmitted from 2 base stations with different spreading codes.

On the receiving side, a signal received by antenna 701 is down-converted and demodulated by radio reception circuit 702, and then despread by matched filters 703 and 704. Matched filter 703 despreads signals of the self channel from one base station and matched filter 704 despreads signals of the self channel transmitted from the other base station.

Search circuit 705 detects timings of a total of 4 paths, 2 paths for each spreading code and the despread signals of respective timings are input to synchronizing detection circuits 706 to 709. Here, the despread signals of the pilot symbols of the matched filters are input to channel estimation circuits 710 to 713.

The operation and principle of the channel estimation circuits are the same as those in Embodiment 1. Using the estimated values obtained by the channel estimation circuits, these signals are compensated for a time delay by delay processing sections 714 to 717, subjected to synchronizing detection by synchronizing detection circuits 718 to 721, and combined by combining section 722.

This combining performs RAKE combining and handover combining (site diversity combining) simultaneously. When the operation of the apparatus shown in FIG.9 is compared with the operation of the apparatus shown in FIG.3, the apparatus in FIG.9 has more synchronizing detection circuits, while the apparatus in FIG.3 combines the estimated value from the channel estimation circuit (205 of FIG.4) before carrying out synchronizing detection. In other respects, these apparatuses operate similarly with almost the same circuit configuration.

This allows a plurality of demodulation systems (correlators and channel estimation circuits) to be used not only for soft handover and RAKE combining but also for channel estimations of other channels, making it possible to carry out channel estimations of other channels without increasing the scale of the circuit. It is obvious that the demodulation systems can also be shared for multi-code reception.

(Embodiment 8)

Embodiment 8 explains a case where a plurality of demodulation systems such as correlators and channel estimation circuits provided at the reception section for multi-codes, soft handover and RAKE combining are also provided for channel estimations of other channels and the number of correlators used to estimate the channel status of other channels is controlled, seeking to realize more accurate and optimum channel estimations.

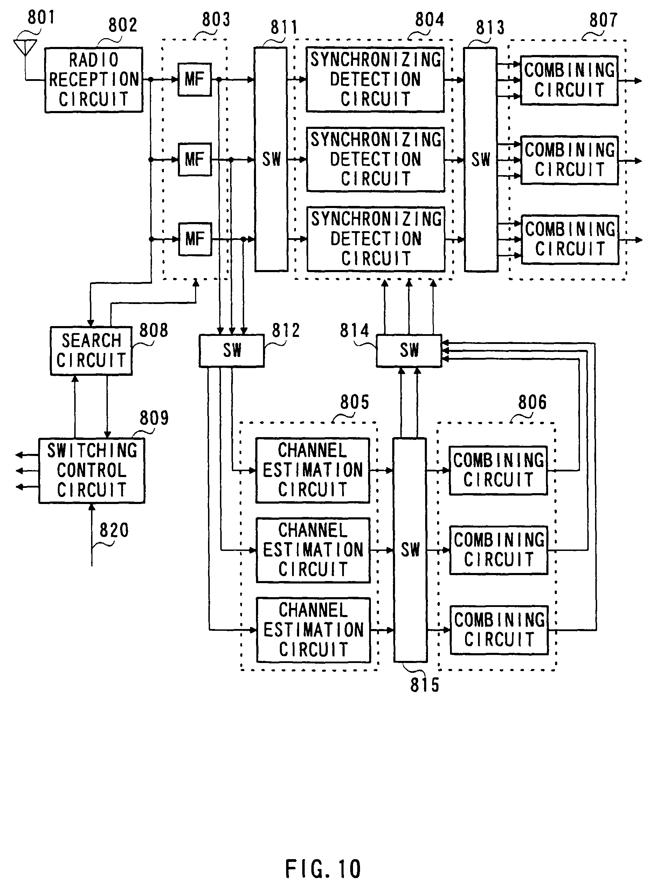

Embodiment 8 is explained below using FIG.10. FIG.10 is a block diagram showing the configuration of a radio communication apparatus according to Embodiment 8 of the present invention. In the present embodiment, the explanation of a terminal apparatus is the same as that in Embodiment 1 and is omitted here.

The transmitting side carries out transmission by time-multiplexing Np pilot data (pilot block) for every Ns symbols of transmit data. On the receiving side, a signal received by antenna 801 is down-converted and demodulated by radio reception circuit 802, and then despread by matched filter group 803. In matched filter group 803, several matched filters despread the self channel signal and other matched filters despread signals of other channels.

Search circuit 808 detects timings of a plurality of paths and the despread signals of the respective timings are input to synchronizing detection circuit group 804. Furthermore, the despread signals of the pilot symbols of the matched filter group are input to channel estimation circuit group 805. The operation and principle of the channel estimation circuits are the same as those in Embodiment 1. The signals from synchronizing detection circuit group 804 are RAKE-combined by combining circuit group 807 for detection signal combining and the signals from channel estimation circuit group 805 are RAKE-combined by combining circuit group 806 for channel estimations. Synchronizing detection circuit group 804 compensates the signals for a time delay using time delay processing.

Synchronizing detection circuit group 804, channel estimation circuit group 805 for detection signal combining, combining circuit group 807 for detection signal combining and combining circuit group 806 for channel estimations are connected to switches 811 to 815, respectively so that the circuits in each group can be switched appropriately. These switches 811 to 815 are controlled by switching control circuit 809. This switching control circuit 809 controls switches 811 to 815 using control information signal 810 such as the number of multi-codes, presence of soft handover, number of RAKE combining paths, spreading codes, pilot signal timing. This switching control circuit 809 also controls search circuit 808.

This allows the demodulation systems necessary for channel estimations to be switched for multi-codes, soft handover and RAKE combining depending on the situation, improving channel estimations while suppressing an increase of additional demodulation systems above for channel estimations of other channels to a minimum.

(Embodiment 9)

FIG.3 and FIG.4 are used to explain Embodiment 9. The present embodiment also carries out radio communications with a terminal apparatus such as a mobile station apparatus, but the explanation of the terminal apparatus is the same as that in Embodiment 1 and is omitted here.

The transmitting side carries out transmission by time-multiplexing Np pilot data (pilot block) for every Ns symbols of transmit data. On the receiving side, a signal received by antenna 101 is down-converted and demodulated by radio reception circuit 102, and then despread by matched filters 103 and 104. Matched filter 103 despreads a signal of the self channel and matched filter 104 despreads a signal of the other channel.

The despread signals of two path timings detected by search circuit 105 are input to synchronizing detection circuits 106 and 107, respectively. Here, the despread signals of pilot symbols of the respective matched filters are input to channel estimation circuits 108 and 109.

In FIG.4, reference code 201 is a despread pilot signal of the self channel and reference code 202 is a despread pilot signal of the other channel. Signals 201 and 202 are subjected to channel estimations on a channel basis by estimation circuits 203 and 204, respectively. At this time, channel estimations are carried out using pilot blocks of a plurality of slots before and after in the frame format of the received signal. These pilot blocks of a plurality of slots are combined by combining section 205 and output as a combined estimated value.

Channel estimations are carried out based on the principle as follows: Suppose the despread signal of the first path of the mth symbol of the nth slot is given by expression (1) above, then a channel estimated value of the first path of the nth pilot block is given by expression (2) above, and channel estimations shown in expression (3) above are carried out using pilot symbols in a plurality of slots before and after.

Where, $\alpha i$ ($\leqq 1$) is a weighting coefficient. Using estimated values of highly correlated slots before and after can improve the accuracy of channel estimations. Furthermore, suppose an estimated value of the self channelchannelstimation circuit 203 is $\zeta l(n)$self and an estimated value of the other channelchannelstimation circuit 204 is $\zeta l(n)$other, then output 206 after the combining is given by expression (6) above.

Using the estimated values obtained by channel estimation circuits 108 and 109 according to the method above, the despread signals are compensated for a time delay by delay processing sections 110 and 111, subjected to synchronizing detection by synchronizing detection sections 112 and 113 and RAKE-combined by combining section 114. It is obvious that the signals can be combined after weighting them using expression (8) instead of expression (6) as described in Embodiment 3.

Thus, carrying out channel estimations by not only using conventional pilot signals before and after but also combining pilot signals before and after of the other channel of the same channel status makes it possible to improve the accuracy of estimations.

(Embodiment 10)

FIG.6 and FIG.4 are used to explain Embodiment 10. The present embodiment also carries out radio communications with a terminal apparatus such as a mobile station apparatus, but the explanation of the terminal apparatus is the same as that in Embodiment 1 and is omitted here.

The transmitting side carries out transmission by inserting (code-multiplexing) a pilot channel orthogonal to a data channel with suppressed transmit power. On the receiving side, a signal received by antenna 401 is down-converted and demodulated by radio reception circuit 402, then despread by matched filters 403 to 405. Matched filters 403 and 405 despread a data signal and pilot signal of the self channel, respectively and matched filter 405 despreads a pilot signal of the other channel.

The despread signals of two path timings detected by search circuit 406 are input to synchronizing detection circuits 407 and 408, respectively. Here, the despread signals of the pilot symbols of the respective matched filter are input to channel estimation circuits 409 and 410.

In FIG.4, reference code 201 is a despread pilot signal of the self channel and reference code 202 is a despread pilot signal of the other channel. Signals 201 and 202 are subjected to channel estimations for the respective channels by estimation circuits 203 and 204. At this time, channel estimations are carried out using pilot signals of a plurality of symbols before and after of the received signal. These pilot signals are combined by combining section 205 and output as a combined estimated value.

Channel estimations are carried out based on the principle as follows: Suppose the despread signal of the first path of the nth slot is given by expression (1) above, then an estimated value shown in expression (4) above is obtained by carrying out weighting and synchronizing addition on 2L symbols before and after. Furthermore, suppose an estimated value of the self channelchannelstimation circuit 203 is $\zeta l(n)$self and an estimated value of the other channelchannelstimation circuit 204 is ζl(n)other, then output 206 after the combining is given by expression (6) above.

Using the estimated values obtained by channel estimation circuits 409 and 410 according to the method above, the despread signals are compensated for a time delay by delay processing sections 411 and 412, subjected to synchronizing detection by synchronizing detection sections 413 and 414 and RAKE-combined by combining section 415. It is obvious that as described in Embodiment 3, weighting and combining can also be carried out using expression (8) instead of expression (6).

Thus, carrying out channel estimations by using not only conventional pilot signals before and after but also pilot signals before and after of the other channel with the same channel status makes it possible to improve the accuracy of estimations.

Embodiments 1 to 10 above can be implemented by combining them appropriately. Moreover, the present invention is not limited to Embodiments 1 to 10 above, but can be implemented with various modifications. For example, it can have a configuration comprising a control section that controls the number of despreaders used for estimations of the channel status of the other channel according to transmission status information. The transmission status information such as the presence of multi-code transmission, presence of handover and/or situation of the transmission path makes it possible to know the number of despreaders (e.g., correlators) used, allowing unused despreaders to be used for calculating estimated values of the other channel. This allows efficient utilization of despreaders.

The channel estimation apparatus and radio communication apparatus in the present invention are applicable to communication terminal apparatuses such as mobile station apparatuses carrying out radio communications with a base station apparatus in a radio communication system.

As described above, the present invention can improve the accuracy of channel estimations by carrying out channel estimations using not only pilot signals of the self channel but also pilot signals of other channels in a channel estimation apparatus used in a DS-CDMA radio communication apparatus carrying out synchronizing detection through channel estimations using pilot signals.

Furthermore, the present invention can also change over demodulation systems necessary for channel estimations of other channels for soft handover or RAKE combining according to the situation, making it possible to minimize expansion of the circuit scale required for the implementation above.

The present invention is not limited to the above described embodiments, and various variations and modifications may be possible without departing from the scope of the present invention.

This application is based on the Japanese Patent Application No.HEI 10-165508 filed on June 12, 1998, entire content of which is expressly incorporated by reference herein.

**Claims**

1. A channel estimation apparatus, comprising:

   a first channel estimator(203) that obtains a first estimated value by estimating from a received signal the channel status of the self channel;
   a second channel estimator(204) that obtains a second estimated value by estimating from the received signal the channel status of another channel; and
   a combiner(205) that combines the first and second estimated values into a combined estimated value.

2. The channel estimation apparatus according to claim 1, wherein the other channel is a common physical channel.

3. The channel estimation apparatus according to claim 1, wherein the other channel is an individual physical channel assigned to the user.

4. The channel estimation apparatus according to claim 1, wherein the first and second channel estimators(203,204) obtain the first and second estimated values using pilot signals of the self channel and the other channel.

5. The channel estimation apparatus according to claim 4, wherein the pilot signals are time-multiplexed with data and transmitted.

6. The channel estimation apparatus according to claim 5, wherein the first and second estimators(203,204) carry out channel estimations by combining pilot signals of a plurality of cycles of the self channel and pilot signals of a plurality of cycles of the other channel.

7. The channel estimation apparatus according to claim 4, wherein the pilot signals are code-multiplexed with a data channechannelach channel and transmitted.

8. The channel estimation apparatus according to claim 7, wherein the first and second estimators(203,204) carry out channel estimations by combining pilot signals of a plurality of symbols of the self channel and pilot signals of a plurality of symbols of the other channel.

9. The channel estimation apparatus according to claim 1, wherein the combiner(205) combines the first and second estimated values after weighting them.

10. The channel estimation apparatus according to claim 1, wherein the combiner(205) combines the second estimated value of the other channel having large average reception power with the first estimated value.

11. The channel estimation apparatus according to claim 1, wherein the combiner(205) combines the second estimated value of the other channel having a dense transmission status with the first estimated value.

12. The channel estimation apparatus according to claim 4, wherein the combiner(205) combines the second estimated value of the other channel having pilot signals transmitted at a timing with a relatively great difference from the transmit timing of pilot signals of the self channel, with the first estimated value.

13. A communication terminal apparatus, comprising:

a timing detector(406) that detects the timing of an incoming wave;
at least two despreaders(404,405) that despread at the timing of the incoming wave;
a channel estimator(409,410) that carries out channel estimations;
a synchronizing detector(407,408) that carries out synchronizing detection using channel estimated values,
wherein said channel estimator comprises:
a first channel estimator(503) that obtains a first estimated value by estimating from a received signal the channel status of the self channel and;
a second channel estimator(504) that obtains a second estimated value by estimating from the received signal the channel status of another channel and; and
a combiner(509) that combines the first and second estimated values into a combined estimated value.

14. The communication terminal apparatus according to claim 13, wherein said timing detector(406), said despreaders(407,408) and the first and second estimators(503,504) of said channel estimator can be changed over appropriately during handover reception, multi-code reception or RAKE reception.

15. The communication terminal apparatus according to claim 13, comprising a controller that controls the number of despreaders used for estimations of the channel status of the other channel according to transmission status information.

16. A base station apparatus carrying out radio communications with a communication terminal apparatus,
wherein said communication terminal apparatus comprises:

a timing detector(406) that detects the timing of an incoming wave;
at least two despreaders(404,405) that despread at the timing of the incoming wave;
a channel estimator(409,410) that carries out channel estimations;
a synchronizing detector(407,408) that carries out synchronizing detection using channel estimated values,
wherein said channel estimator comprises:
a first channel estimator(503) that obtains a first estimated value by estimating from a received signal the channel status of the self channel;
a second channel estimator(504) that obtains a second estimated value by estimating from the received signal the channel status of another channel; and
a combiner(509) that combines the first and second estimated values into a combined estimated value.

17. A channel estimation method, comprising:

a first channel estimation step for obtaining a first estimated value by estimating from a received signal the channel status of the self channel;
a second channel estimation step for obtaining a second estimated value by estimating from the received signal the channel status of another channel; and
a combining step for combining the first and second estimated values into a combined estimated value.

18. A radio communication method, comprising:

a timing detection step for detecting the timing of an incoming wave;
a despreading step for despreading signals at the timing of the incoming wave;
a channel estimation step; and
a synchronizing detection step for carrying out synchronizing detection using estimated values obtained by these channel estimations,
wherein said channel estimation step comprises:
a first channel estimation step for obtaining a first estimated value by estimating from a received signal the channel status of the self channel;

a second channel estimation step for obtaining a second estimated value by estimating from the received signal the channel status of the other channel; and

a combining step for combining the first and second estimated values into a combined estimated value.

PRIOR ART

FIG. 1

PRIOR ART

FIG. 2

FIG. 3

FIG. 4

FIG. 5

FIG. 6

FIG. 7

FIG. 8

16

FIG. 9

FIG. 10